# EUROPEAN PATENT APPLICATION

(11) **EP 4 826 273 A1**
(43) Date of publication of application: **21.10.2026**
(21) Application number: 24904376.1
(22) Date of filing: 11.12.2024
(51) Int. Cl.: F16F 15/02, F16F 15/073, F16F 15/04

(54) **SEISMIC ISOLATION APPARATUS**

(30) Priority: 13.12.2023 KR 20230180916; 03.04.2024 KR 20240045202
(71) Applicant: S&Y System Co.,Ltd, Gwangju-si, Gyeonggi-do 12729 (KR)
(72) Inventor: YU, Hong Geun, Guri-si, Gyeonggi-do 11902 (KR)
(74) Representative: ABG Intellectual Property Law, S.L.
(86) International application number: PCT/KR2024/096737
(87) International publication number: WO 2025/127811

(57) **Abstract**

The present disclosure is intended to provide a seismic isolation apparatus provided with an elastic rail (130) configured to provide an elastic repulsive force so that a guide block (120) may naturally return to a central portion as an origin, thereby reducing costs, significantly reducing an exterior dimension of a product, and providing high seismic isolation efficiency. A seismic isolation apparatus of the present disclosure includes: a pendular guide module (100); and a cover plate (200) mounted on the pendular guide module (100), in which the pendular guide module (100) includes: a guide rail (110) coupled to the cover plate (200); a guide block (120) configured to move along the guide rail (110); an elastic rail (130) fixed to the cover plate (200) and configured to adjoin and guide the guide block (120) so that the guide block (120) is returned to a central portion of the guide rail (110), as an origin, by an elastic force; and a guide bearing (160) rotatably mounted on the guide block (120) and configured to rotate while adjoining the elastic rail (130) and moving.

## Description

### [Technical Field]

The present disclosure relates to a seismic isolation apparatus configured to reduce vibration by using an LM guide, and more particularly, to a seismic isolation apparatus provided with an elastic rail configured to allow an LM guide to naturally return to an origin by using a principle of a pendulum.

### [Background Art]

In general, in case that an earthquake occurs, vibration is transmitted to a structure, such as a building or a facility, in a vertical or horizontal direction, and the in the horizontal direction severely shakes and twists the structure.

In this case, in case that a magnitude of the transmitted vibration is large, the structure is partially damaged, which degrades stability of the structure, and in severe cases, collapses the structure.

Therefore, various seismic isolation apparatuses have been developed and used to protect structures or equipment from earthquakes.

Meanwhile, a linear motion guide (LM guide) is a mechanical element installed in a machine tool or the like shaped to have a stationary body and a movable body configured to rectilinearly move on the stationary body, such that a relative rectilinear motion may be smoothly performed.

The LM guide may be applied to a seismic isolation apparatus and serve to absorb horizontal vibration.

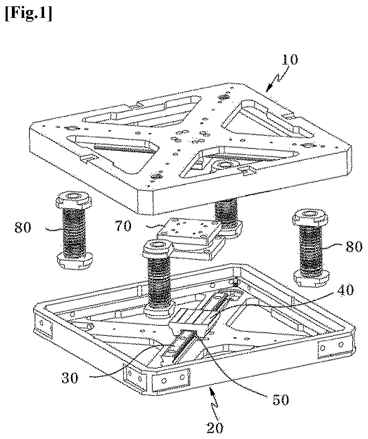

FIG. 1 is a view illustrating a seismic isolation apparatus in which an LM guide in the related art is installed.

The seismic isolation apparatus in the related art includes an upper bracket 10 having an upper surface on which a facility to be subjected to seismic isolation is supported; a lower bracket 20 having a shape corresponding to the upper bracket; and an LM guide including LM rails 30 respectively installed across diagonal lines of the inner surface of the upper bracket and an inner surface of the lower bracket, LM blocks 40 configured to slide along the LM rails 30, and a retainer 50 configured to restrain steel balls inside the LM blocks 40.

In addition, the LM block 40, which is coupled to the LM rail 30 installed on the inner surface of the upper bracket 10, and the LM block 40, which is coupled to the LM rail 30 installed on the inner surface of the lower bracket 20, may be coupled to each other with a buffer member 70 interposed therebetween.

In addition, a separate vibration absorption part 80, together with a guide module, may be installed between the upper bracket 10 and the lower bracket 20 and absorb both vertical vibration and horizontal vibration, thereby preventing the upper bracket 10 and the lower bracket 20 from being separated.

In the seismic isolation apparatus in the related art configured as described above, the vibration absorption part 80 for forced return to an original position is provided as a coil spring. However, because the coil spring has a high manufacturing cost and a large size, there is a limitation in reducing an overall dimension of the seismic isolation apparatus, and various types of restrictions occur in a place of use. In addition, in case that the coil spring is excessively deformed, the coil spring is permanently deformed, which causes a problem in that tension of the coil spring is lost.

### [Disclosure]

### [Technical Problem]

The present disclosure has been made in an effort to solve the above-mentioned problem, and an object of the present disclosure is to provide a seismic isolation apparatus provided with an elastic rail 130 configured to provide an elastic repulsive force so that a guide block 120 may naturally return to a central portion as an origin, thereby reducing costs, significantly reducing an exterior dimension of a product, and providing high seismic isolation efficiency.

In addition, the present disclosure has been made in an effort to solve the above-mentioned problem, and another object of the present disclosure is to provide a seismic isolation apparatus configured such that a guide block is guided by an elastic repulsive force of an elastic rail so as to forcibly return to a central portion of the elastic rail, as an origin, thereby improving a seismic isolation effect and enhancing durability.

In addition, another object of the present disclosure is to provide a seismic isolation apparatus in which a high-priced coil spring does not need to be installed, thereby reducing costs, reducing an overall exterior dimension of a product, and diversifying installation locations.

In addition, another object of the present disclosure is to provide a seismic isolation apparatus capable of simplifying a component production process and improving productivity.

In addition, another object of the present disclosure is to provide a seismic isolation apparatus in which an auxiliary elastic body is added, thereby improving durability and operational efficiency.

In addition, another object of the present disclosure is to provide a seismic isolation apparatus that is installed by using an elastic bracket having an 'L' shape and thus has a uniform elastic force.

In addition, another object of the present disclosure is to provide a seismic isolation apparatus that is manufactured by casting (particularly, wax casting), such that only a minimum amount of raw materials may be used, thereby improving economic feasibility and easily and conveniently managing production quality.

### [Technical Solution]

In order to achieve the above-mentioned objects, a seismic isolation apparatus according to one embodiment of the present disclosure includes: a pendular guide module (100); and a cover plate (200) mounted on the pendular guide module (100), in which the pendular guide module (100) includes: a guide rail (110) coupled to the cover plate (200); a guide block (120) configured to move along the guide rail (110); an elastic rail (130) fixed to the cover plate (200) and configured to adjoin and guide the guide block (120) so that the guide block (120) is returned to a central portion of the guide rail (110), as an origin, by an elastic force; and a guide bearing (160) rotatably mounted on the guide block (120) and configured to rotate while adjoining the elastic rail (130) and moving.

The elastic rail (130) is disposed in parallel with the guide rail (110), formed in the shape of a plate having elasticity, and formed to be inclined toward a central portion in a direction toward the cover plate (200).

Two opposite ends of the elastic rail (130) are fixed by a fixing block (140) and spaced apart from the cover plate (200) at a predetermined interval, and the central portion of the elastic rail (130) is disposed to be deformed to be bent upward and downward.

The seismic isolation apparatus further includes: a support block (150) fixed to the cover plate (200) and configured to adjoin the elastic rail (130) when the central portion of the elastic rail (130) is deformed to be bent, in which the support block (150) has an inclined support surface (151) inclined so as to become gradually distant from the elastic rail (130) from a central portion toward two opposite ends.

The central portion of the elastic rail (130) is fixed by the fixing block (140) and spaced apart from the cover plate (200) at a predetermined interval, and the two opposite ends of the elastic rail (130) are disposed to be deformed to be bent upward and downward.

Separation prevention portions (131) protrude from the two opposite ends of the elastic rail (130).

The two opposite ends of the elastic rail (130) are bent in a 'U' shape so as to have elasticity and fixed to the cover plate (200), and the central portion of the elastic rail (130) is disposed to be deformed to be bent upward and downward.

The seismic isolation apparatus further includes: an auxiliary elastic body (170) configured to elastically support the elastic rail (130) in a direction opposite to the cover plate (200).

The central portion of the elastic rail (130) is divided, such that the divided central portions are respectively and independently disposed to be deformed to be bent.

The seismic isolation apparatus further includes: a center module (300) having an elastic force in a vertical direction, in which the pendular guide module (100) is provided as two pendular guide modules (100) operatively mounted on upper and lower portions of the center module (300) in directions intersecting each other.

In addition, a seismic isolation apparatus according to another embodiment of the present disclosure includes: a pendular guide module (1000); and a cover plate (2000) mounted on the pendular guide module (1000), in which the pendular guide module (1000) includes: a guide rail (1100) coupled to the cover plate (2000); a guide block (1200) configured to move along the guide rail (1100); an elastic rail (1300) fixed to the cover plate (2000) and configured to adjoin and guide the guide block (1200) so that the guide block (1200) is returned to a central portion of the guide rail (1100), as an origin, by an elastic force; and a guide bearing (1600) rotatably mounted on the guide block (1200) and configured to rotate while adjoining the elastic rail (1300) and moving.

The elastic rail (1300) is disposed in parallel with the guide rail (1100), formed in the shape of a plate having elasticity, and formed to be horizontal or inclined toward a central portion in a direction toward the cover plate (2000).

Two opposite ends of the elastic rail (1300) are fixed by fixing blocks (1400) and spaced apart from the cover plate (2000) at a predetermined interval, and the central portion of the elastic rail (1300) is disposed in a free state so as to be deformed to be bent upward and downward.

The seismic isolation apparatus further includes: a support block (1500) fixed to the cover plate (2000).

The elastic rails (1300) are respectively disposed at two opposite sides of the guide rail (1100) and formed in a rectangular shape in which two opposite ends thereof are connected to one another in a 'U' shape, the central portion of the elastic rail (1300) is fixed by a fixing block (1400) and spaced apart from the cover plate (2000) at a predetermined interval, and the two opposite ends of the central portion are disposed to be deformed to be bent upward and downward.

The elastic rail (1300) includes: a groove portion (1320) formed at a center of the elastic rail (1300) and formed as a semicircle groove in a direction toward the cover plate (2000); and coupling portions (1360) provided at the two opposite ends of the elastic rail (1300) and having at least one through-hole (1370).

The elastic rail (1300) is formed as a structure having a rail width that decreases toward two opposite ends, and the central portion of the elastic rail (1300) is disposed to be deformed to be bent upward and downward.

The seismic isolation apparatus further includes: an auxiliary elastic body (1700) configured to elastically support the elastic rail (1300) in a direction opposite to the cover plate (2000).

The elastic rail (1300) further includes an auxiliary rail (1800) fixed to the elastic rail (1300) by means of at least one clamp (1890) having a 'C' shape, the auxiliary rail (1800) being positioned between the elastic rail (1300) and the cover plate (2000).

The auxiliary rail (1800) is formed in the shape of a plate having elasticity and provided with a groove portion (1820) provided at a center of the auxiliary rail (1800) and formed as a semicircle groove in the direction toward the cover plate (2000), and the auxiliary rail (1800) is elongated in parallel with the guide rail (1100) and the elastic rail (1300) in a movement direction of the guide block (1200).

The seismic isolation apparatus further include: a center module (3000) having an elastic force in a vertical direction, in which the pendular guide module (1000) is provided as two pendular guide modules (100) operatively mounted on upper and lower portions of the center module (3000) in directions intersecting each other.

### [Advantageous Effects]

The seismic isolation apparatus of the present disclosure described above provides the following effects.

The guide block 120 is guided by the elastic repulsive force of the elastic rail 130 so as to forcibly return to the central portion of the elastic rail 130, as an origin, thereby providing an effect of improving the seismic isolation effect and enhancing the durability.

In addition, because a high-priced coil spring does not need to be installed, the present disclosure provides an effect of reducing costs, reducing an overall exterior dimension of a product, and diversifying installation locations.

In addition, the present disclosure provides an effect of simplifying the component production process and improving the productivity.

In addition, because the auxiliary elastic body is added, the present disclosure provides an effect of improving the durability and operational efficiency.

In addition, because the seismic isolation apparatus is installed by using the elastic bracket having the 'L' shape, the present disclosure provides an effect in that the seismic isolation apparatus has a uniform elastic force.

In addition, because the seismic isolation apparatus is manufactured by casting (particularly, wax casting), the present disclosure provides an effect in that only a minimum amount of raw materials may be used, thereby improving the economic feasibility and easily and conveniently managing the production quality.

### [Description of Drawings]

FIG. 1 is a perspective view of a seismic isolation apparatus in the related art.
FIG. 2 is a perspective view of a seismic isolation apparatus according to a first embodiment of the present disclosure.
FIG. 3 is an exploded perspective view of the seismic isolation apparatus according to the first embodiment of the present disclosure.
FIG. 4 is a cross-sectional view of the seismic isolation apparatus according to the first embodiment of the present disclosure.
FIG. 5 is a cross-sectional view illustrating a state in which an elastic rail 130 is deformed when the seismic isolation apparatus according to the first embodiment of the present disclosure operates.
FIG. 6 is a perspective view of a seismic isolation apparatus according to a second embodiment of the present disclosure.
FIG. 7 is a cross-sectional view of the seismic isolation apparatus according to the second embodiment of the present disclosure.
FIG. 8 is a cross-sectional view of a seismic isolation apparatus according to a third embodiment of the present disclosure.
FIG. 9 is a cross-sectional view of a seismic isolation apparatus according to a fourth embodiment of the present disclosure.
FIG. 10 is a cross-sectional view of a seismic isolation apparatus according to a fifth embodiment of the present disclosure.
FIG. 11 is a cross-sectional view of a seismic isolation apparatus according to a sixth embodiment of the present disclosure.
FIG. 12 is a perspective view of a seismic isolation apparatus according to a seventh embodiment of the present disclosure.
FIG. 13 is an exploded perspective view of the seismic isolation apparatus according to the seventh embodiment of the present disclosure.
FIG. 14 is a partially enlarged view of the seismic isolation apparatus according to the seventh embodiment of the present disclosure.
FIG. 15 is a perspective view of an elastic rail of the seismic isolation apparatus according to the seventh embodiment of the present disclosure.
FIG. 16 is a cross-sectional view of the seismic isolation apparatus according to the seventh embodiment of the present disclosure.
FIG. 17 is an exploded perspective view of a seismic isolation apparatus according to an eighth embodiment of the present disclosure.
FIG. 18 is a cross-sectional view of the seismic isolation apparatus according to the eighth embodiment of the present disclosure.
FIG. 19 is an exploded perspective view of a seismic isolation apparatus according to a ninth embodiment of the present disclosure.
FIG. 20 is a perspective view and a cross-sectional view of the seismic isolation apparatus according to the ninth embodiment of the present disclosure.
FIG. 21 is an exploded perspective view of a seismic isolation apparatus according to a tenth embodiment of the present disclosure.
FIG. 22 is a perspective view of the seismic isolation apparatus according to the tenth embodiment of the present disclosure.
FIG. 23 is a cross-sectional view of the seismic isolation apparatus according to the tenth embodiment of the present disclosure.
FIGS. 24 and 25 are views illustrating states in which the seismic isolation apparatus according to the tenth embodiment of the present disclosure is coupled.
FIG. 26 is a perspective view of a guide block of a seismic isolation apparatus according to an eleventh embodiment of the present disclosure.
FIG. 27 is an exploded perspective view of the guide block of the seismic isolation apparatus according to the eleventh embodiment of the present disclosure.
FIG. 28 is a perspective view and an enlarged view of a seismic isolation apparatus according to a twelfth embodiment of the present disclosure.
FIG. 29 is a perspective view of a seismic isolation apparatus according to a thirteenth embodiment of the present disclosure.
FIG. 30 is a perspective view of an elastic rail of the seismic isolation apparatus according to the thirteenth embodiment of the present disclosure.
FIG. 31 is a perspective view and an enlarged view of the elastic rail of the seismic isolation apparatus according to the thirteenth embodiment of the present disclosure.

### [Best Mode]

The following detailed description of the present disclosure will be made with reference to the accompanying drawings illustrating specific exemplary embodiments for carrying out the present disclosure. These embodiments will be described in detail enough to carry out the present disclosure by those skilled in the art. It should be understood that various embodiments of the present disclosure are different from one another but need not be mutually exclusive. For example, particular shapes, structures, and characteristics described herein in respect to one embodiment may be implemented in other embodiments without departing from the spirit and scope of the present disclosure. In addition, it should be understood that the position or arrangement of each constituent element in the respective disclosed embodiments may be changed without departing from the spirit and scope of the present disclosure. Therefore, the following detailed description is not intended to limit the present disclosure, and the scope of the present disclosure, if adequately explained, is limited only by the appended claims as well as all the scopes equivalent to the appended claims. Like reference numerals in the drawings refer to the same or similar functions throughout several aspects.

Hereinafter, exemplary embodiments of the present disclosure will be described in more detail with reference to the drawings.

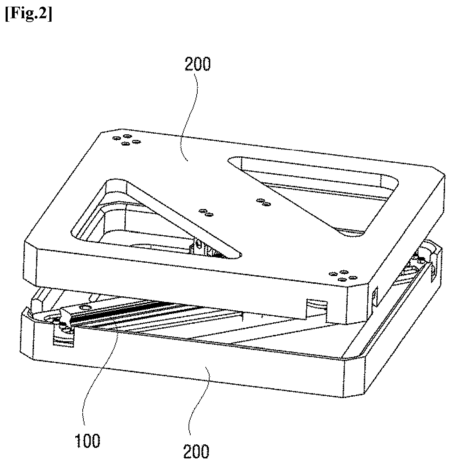

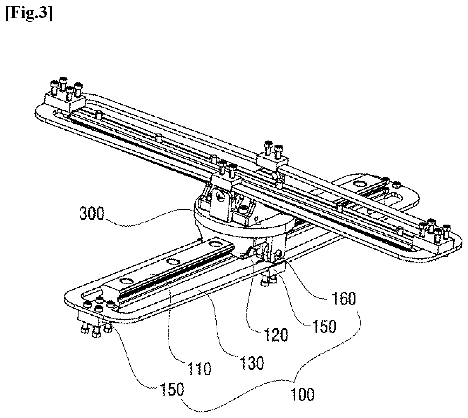

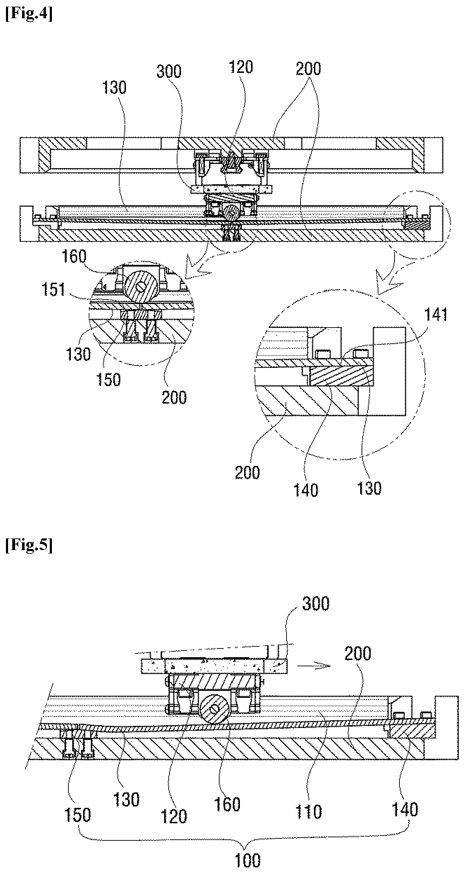

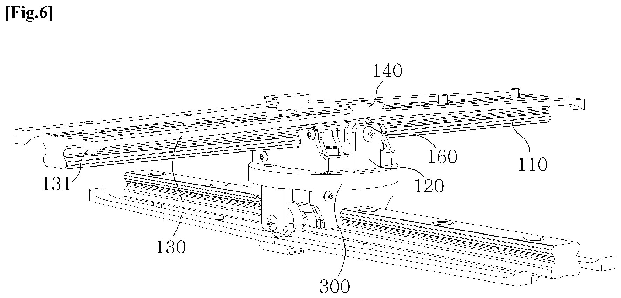

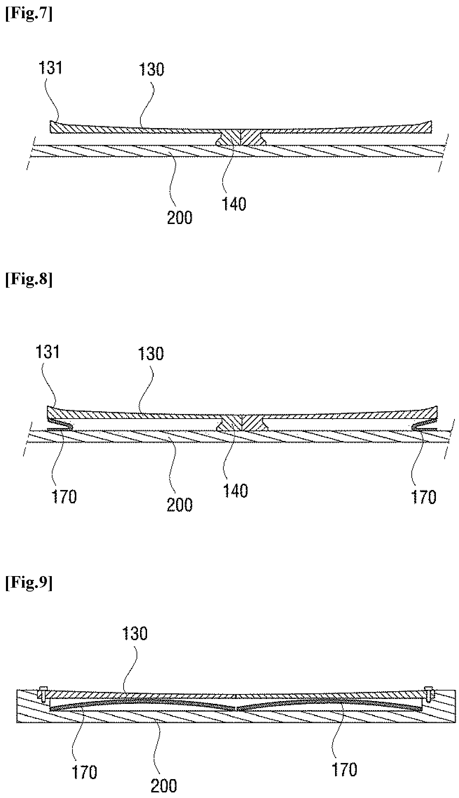

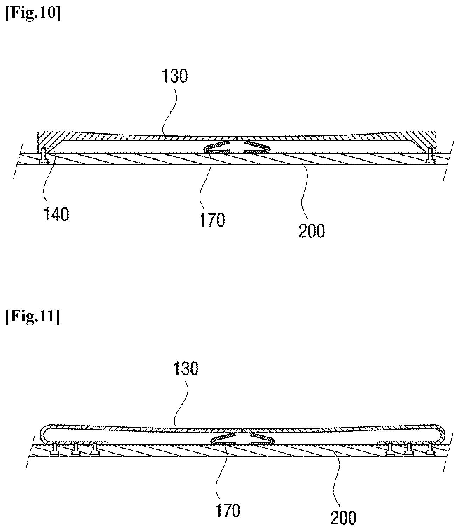

FIG. 2 is a perspective view of a seismic isolation apparatus according to a first embodiment of the present disclosure, FIG. 3 is an exploded perspective view of the seismic isolation apparatus according to the first embodiment of the present disclosure, FIG. 4 is a cross-sectional view of the seismic isolation apparatus according to the first embodiment of the present disclosure, FIG. 5 is a cross-sectional view illustrating a state in which an elastic rail 130 is deformed when the seismic isolation apparatus according to the first embodiment of the present disclosure operates, FIG. 6 is a perspective view of a seismic isolation apparatus according to a second embodiment of the present disclosure, FIG. 7 is a cross-sectional view of the seismic isolation apparatus according to the second embodiment of the present disclosure, FIG. 8 is a cross-sectional view of a seismic isolation apparatus according to a third embodiment of the present disclosure, FIG. 9 is a cross-sectional view of a seismic isolation apparatus according to a fourth embodiment of the present disclosure, FIG. 10 is a cross-sectional view of a seismic isolation apparatus according to a fifth embodiment of the present disclosure, and FIG. 11 is a cross-sectional view of a seismic isolation apparatus according to a sixth embodiment of the present disclosure.

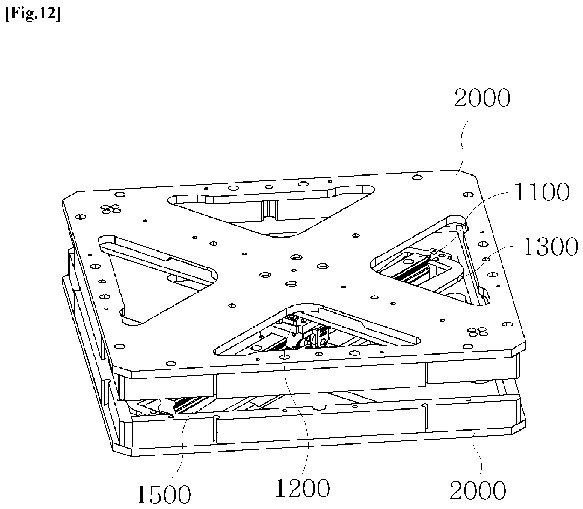

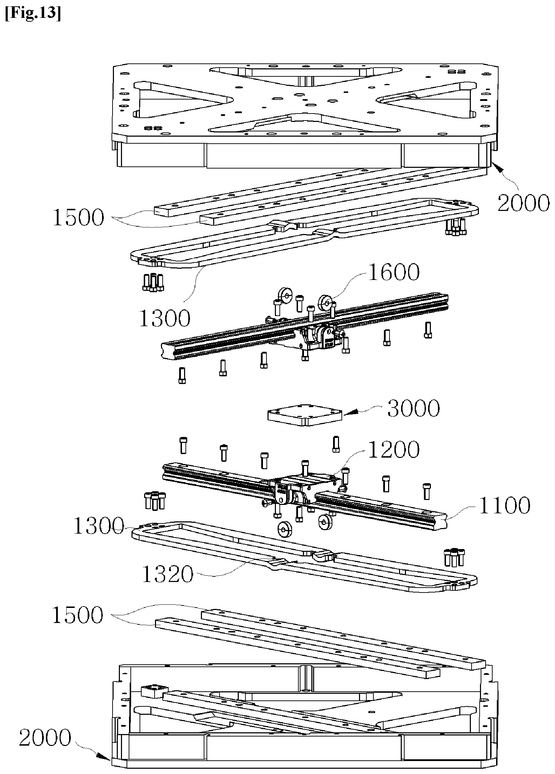

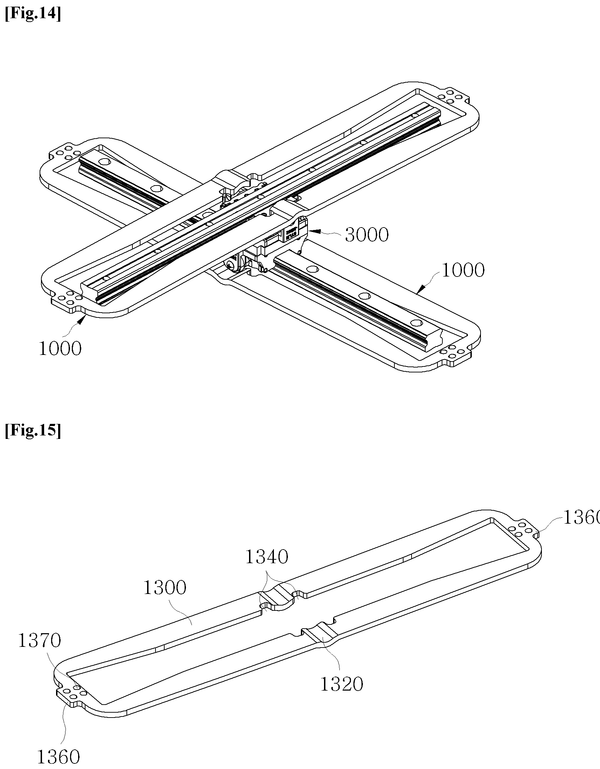

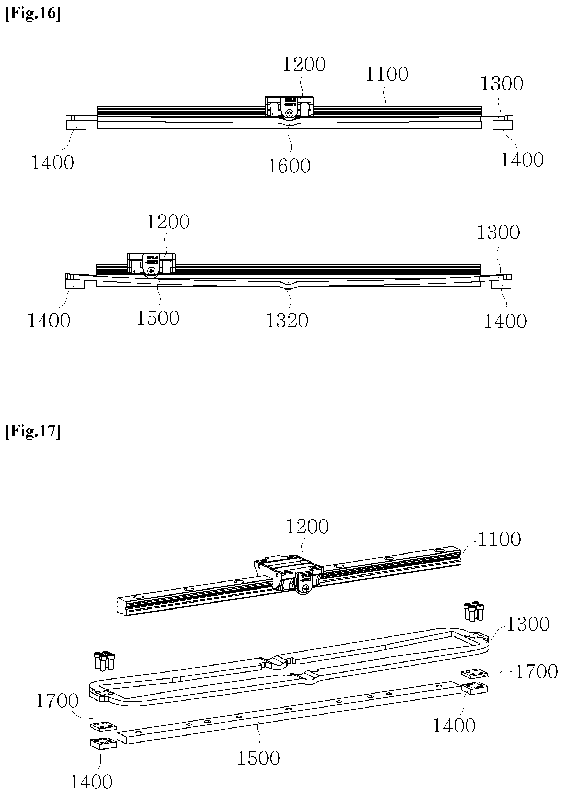

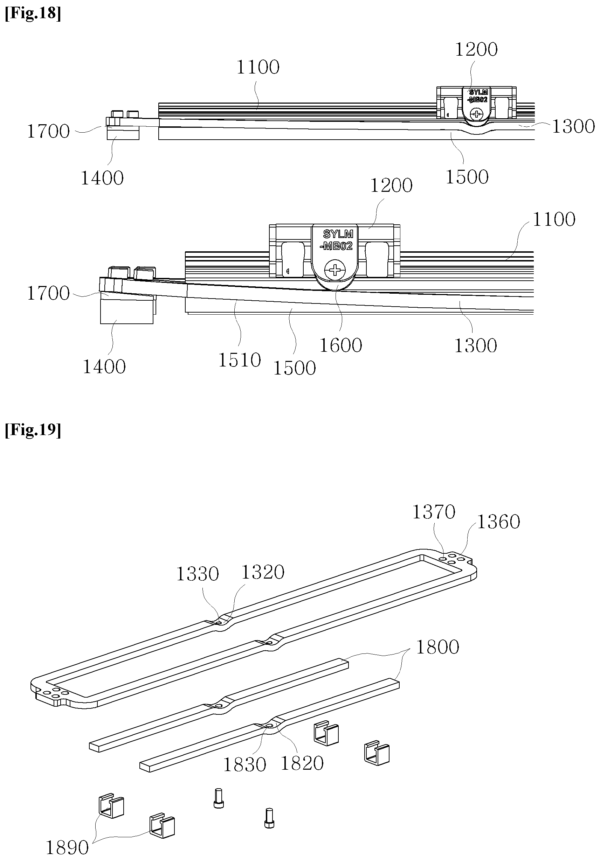

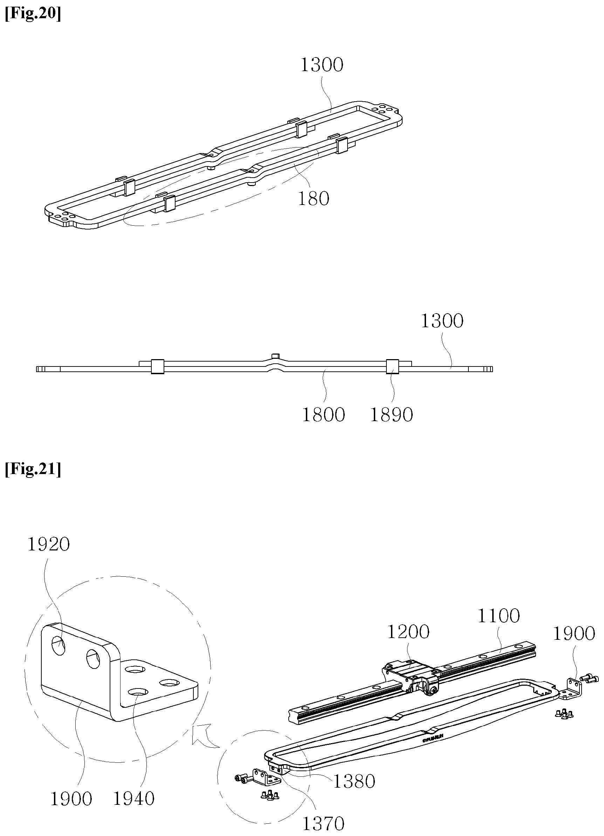

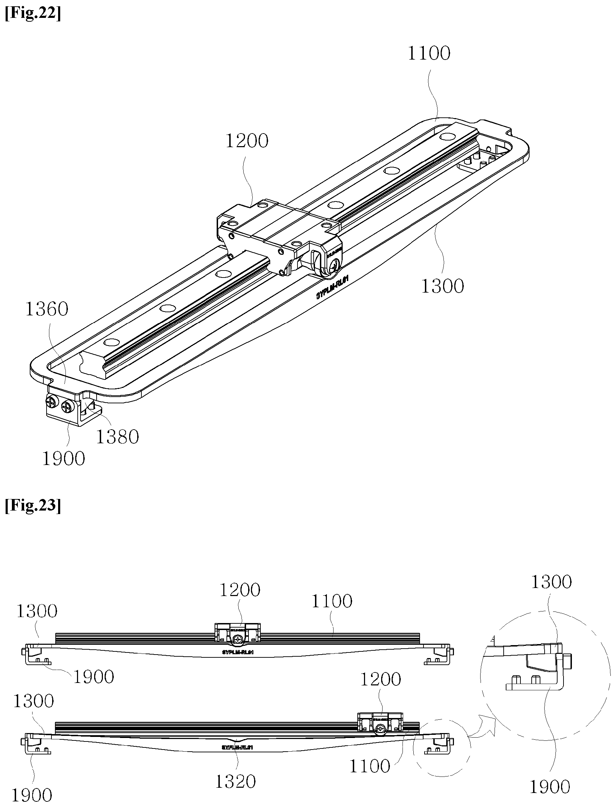

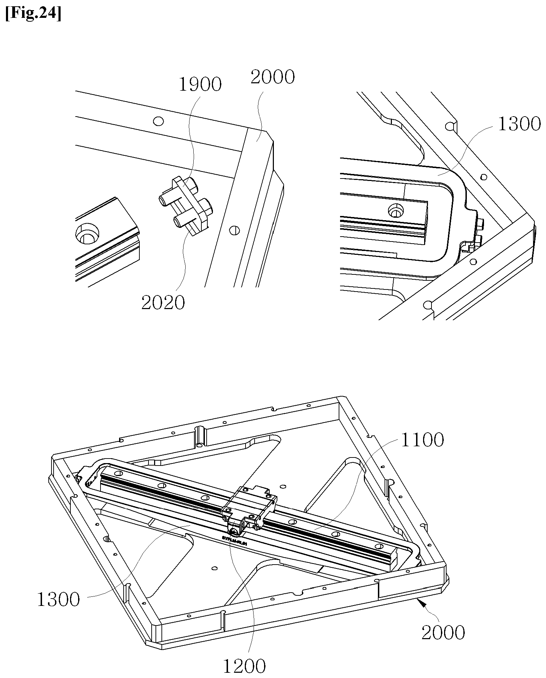

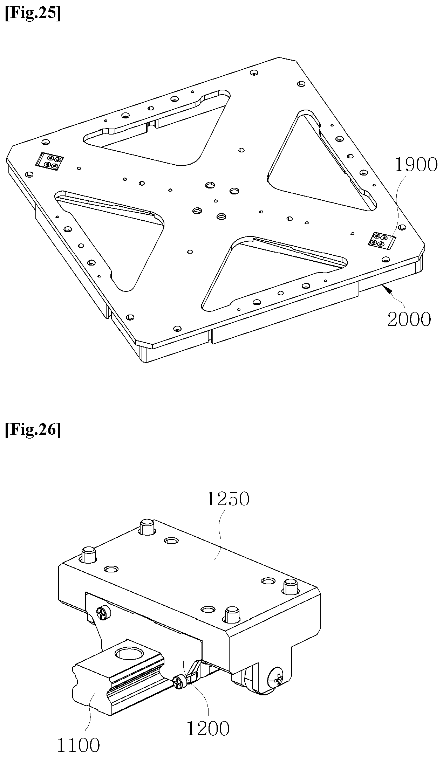

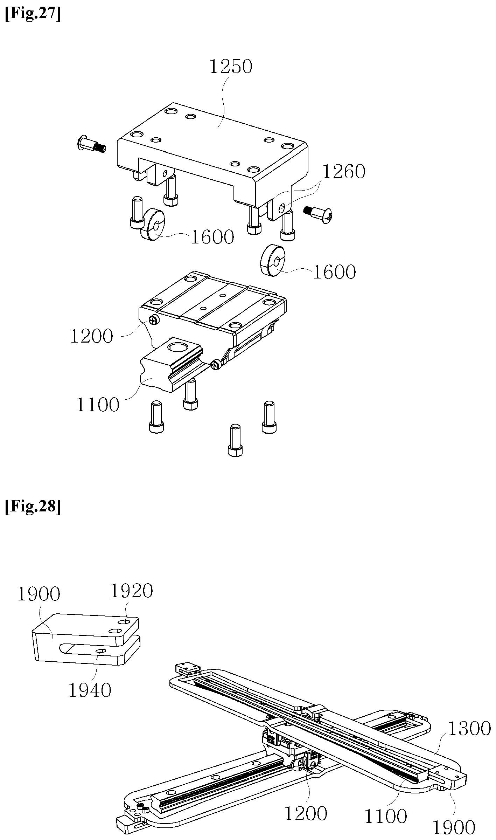

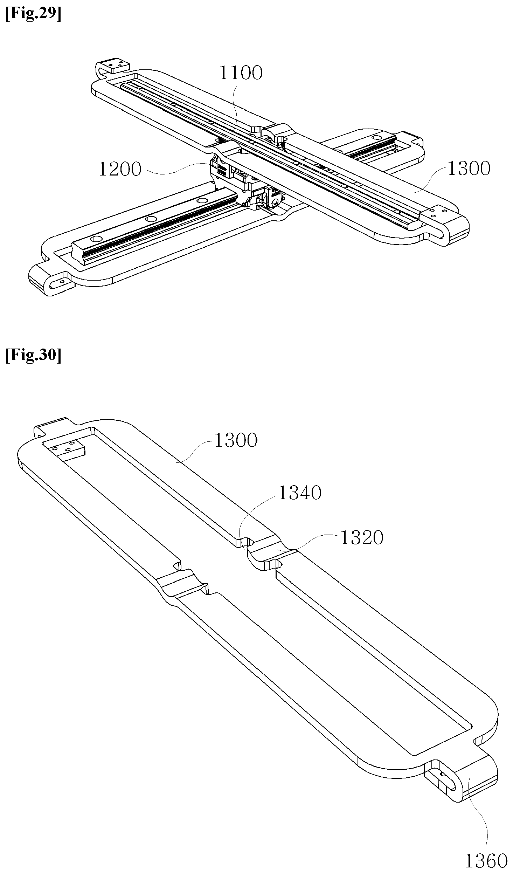

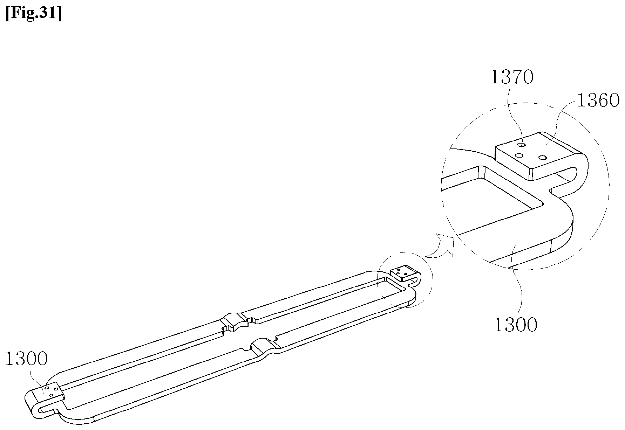

FIG. 12 is a perspective view of a seismic isolation apparatus according to a seventh embodiment of the present disclosure, FIG. 13 is an exploded perspective view of the seismic isolation apparatus according to the seventh embodiment of the present disclosure, FIG. 14 is a partially enlarged view of the seismic isolation apparatus according to the seventh embodiment of the present disclosure, FIG. 15 is a perspective view of an elastic rail of the seismic isolation apparatus according to the seventh embodiment of the present disclosure, FIG. 16 is a cross-sectional view of the seismic isolation apparatus according to the seventh embodiment of the present disclosure, FIG. 17 is an exploded perspective view of a seismic isolation apparatus according to an eighth embodiment of the present disclosure, FIG. 18 is a cross-sectional view of the seismic isolation apparatus according to the eighth embodiment of the present disclosure, FIG. 19 is an exploded perspective view of a seismic isolation apparatus according to a ninth embodiment of the present disclosure, FIG. 20 is a perspective view and a cross-sectional view of the seismic isolation apparatus according to the ninth embodiment of the present disclosure, FIG. 21 is an exploded perspective view of a seismic isolation apparatus according to a tenth embodiment of the present disclosure, FIG. 22 is a perspective view of the seismic isolation apparatus according to the tenth embodiment of the present disclosure, FIG. 23 is a cross-sectional view of the seismic isolation apparatus according to the tenth embodiment of the present disclosure, FIGS. 24 and 25 are views illustrating states in which the seismic isolation apparatus according to the tenth embodiment of the present disclosure is coupled, FIG. 26 is a perspective view of a guide block of a seismic isolation apparatus according to an eleventh embodiment of the present disclosure, FIG. 27 is an exploded perspective view of the guide block of the seismic isolation apparatus according to the eleventh embodiment of the present disclosure, FIG. 28 is a perspective view and an enlarged view of a seismic isolation apparatus according to a twelfth embodiment of the present disclosure, FIG. 29 is a perspective view of a seismic isolation apparatus according to a thirteenth embodiment of the present disclosure, FIG. 30 is a perspective view of an elastic rail of the seismic isolation apparatus according to the thirteenth embodiment of the present disclosure, FIG. 31 is a perspective view and an enlarged view of the elastic rail of the seismic isolation apparatus according to the thirteenth embodiment of the present disclosure.

### [First Embodiment]

As illustrated in FIGS. 1 to 4, a seismic isolation apparatus according to a first embodiment of the present disclosure includes pendular guide modules 100, cover plates 200, and a center module 300.

The pendular guide module 100 is a device for implementing a linear reciprocating motion. Two pendular guide modules 100 are respectively mounted on upper and lower portions of an elastic body and mounted to be symmetric horizontally. The pendular guide modules 100 are disposed to intersect each other and serve to reduce vibration while performing reciprocating motions in a horizontal direction.

More specifically, the pendular guide module 100 includes a guide rail 110, a guide block 120, elastic rails 130, fixing blocks 140, support blocks 150, and guide bearings 160.

The guide rail 110 is a component configured to guide a movement of the guide block 120. The guide rail 110 is formed in a straight shape and fixed to the cover plate 200 in a diagonal direction.

The guide block 120 is mounted to slide along the guide rail 110.

Although not illustrated in the drawings, like a general LM guide, a structure is provided in which a ball bearing is inserted between the guide rail 110 and the guide block 120 to reduce vibration and friction during the movement.

Meanwhile, the elastic rail 130 is fixed to the cover plate 200. The elastic rail 130 adjoins the guide block 120 and serves to guide the guide block 120 so that the guide block 120 is returned to a central portion of the guide rail 110, as an origin, by an elastic force.

Specifically, the elastic rail 130 is formed in the shape of a plate having elasticity and elongated in parallel with the guide rail 110 in a movement direction of the guide block 120.

In addition, the elastic rail 130 is formed to be inclined toward the central portion in a direction toward the cover plate 200, and a gradient becomes gentle toward the central portion.

That is, the elastic rail 130 is formed to be concave in the direction toward the cover plate 200, and the central portion is gently formed to be almost close to horizontality.

In this case, a central portion of the elastic rail 130 is disposed on the same line as the central portion of the guide rail 110.

In addition, the elastic rails 130 are respectively disposed at two opposite sides of the guide rail 110, and two opposite ends of the elastic rails 130 are connected to one another.

That is, the elastic rails 130 are integrated as the two opposite ends of the elastic rails 130 are connected in a 'U' shape.

In addition, the two opposite ends of the elastic rails 130 are fixed to the cover plate 200 by the fixing blocks 140.

The fixing block 140 is formed in a hexahedral shape and fixed to the cover plate 200.

In some instances, the fixing block 140 may, of course, be manufactured to be integrated with the cover plate 200.

In addition, an inclined fixing surface 141 is formed on a surface of the fixing block 140 that adjoins the elastic rail 130, and the inclined fixing surface 141 is inclined in a direction toward the cover plate 200 and a direction toward the central portion of the elastic rail 130.

Therefore, the elastic rail 130 fixed to the fixing block 140 is inclined in the direction toward the cover plate 200 and the direction toward the central portion.

In addition, the elastic rail 130 is disposed to be spaced apart from the cover plate 200 by a height of the fixing block 140, such that the central portion of the elastic rail 130 is disposed to be deformed to be bent upward and downward.

In some instances, a size of the fixing block 140 may be changed, and a fixing bolt and an attachment block may be added to the fixing block 140 to prevent the guide block 120 from being separated from the guide rail 110.

In addition, the central portions of the elastic rails 130 are divided.

That is, as illustrated in FIG. 3, the central portions of the elastic rails 130 are divided, and ends of the central portions are spaced apart from each other at a predetermined interval and disposed to be independently deformed to be bent.

Meanwhile, the support block 150 is formed in a hexahedral shape. The support blocks 150 are respectively disposed at two opposite sides of the central portion of the guide rail 110 and fixed to the cover plate 200.

In some instances, the support block 150 may, of course, be manufactured to be integrated with the cover plate 200.

The support block 150 supports the elastic rail 130 while adjoining the elastic rail 130 when the central portion of the elastic rail 130 is deformed to be bent.

In addition, the support block 150 is formed with inclined support surfaces 151 inclined in opposite directions from a central portion of the support block 150.

The inclined support surfaces 151 are formed to be inclined in the direction toward the cover plate 200 and a direction away from the central portion.

As illustrated in FIG. 4, the inclined support surfaces 151 support the central portion of the elastic rail 130 when the guide block 120 moves to an end of the guide rail 110, thereby increasing an elastic repulsive force of the elastic rail 130.

In some instances, the support block 150 may, of course, have a flat surface without the inclined support surface 151.

Meanwhile, the guide bearings 160 are respectively and rotatably mounted at two opposite sides of the guide block 120 and rotate while adjoining the elastic rail 130 when the guide block 120 moves.

The guide bearing 160 transmits an elastic force of the elastic rail 130 to the guide block 120 to minimize friction with the elastic rail 130 so that the guide block 120 operates naturally.

Meanwhile, like the pendular guide modules 100, two cover plates 200 are provided, and the cover plates 200 are disposed to be symmetric horizontally based on the center module 300 and respectively coupled to the pendular guide modules 100.

The center module 300 is a component configured to provide an elastic force in a vertical direction and made of vibration-proof rubber.

The center module 300 may, of course, be variously configured by using soft plastic, a spring suspension, a disc spring, or the like.

In the seismic isolation apparatus according to the first embodiment of the present disclosure configured as described above, the guide block 120 is supported to be forcibly returned to the central portion of the elastic rail 130, as an origin, by the elastic repulsive force of the elastic rail 130. In addition, because a separate coil spring does not need to be installed, the present disclosure provides an effect of reducing costs, reducing an exterior dimension, and diversifying installation locations. In addition, the present disclosure provides an effect of quickly and accurately returning the guide block to the central portion, as an origin.

### [Second Embodiment]

As illustrated in FIGS. 6 and 7, because a seismic isolation apparatus according to a second embodiment of the present disclosure is identical to the seismic isolation apparatus according to the first embodiment in terms of the remaining configurations, except for the pendular guide module 100, a description thereof will be omitted, and the pendular guide module 100 will be described in detail.

The pendular guide module 100 according to the second embodiment includes the guide rail 110, the guide block 120, the elastic rails 130, the fixing blocks 140, and the guide bearings 160.

The guide rail 110 is a component configured to guide the movement of the guide block 120. The guide rail 110 is formed in a straight shape and fixed to the cover plate 200.

The guide block 120 is mounted to slide along the guide rail 110.

Although not illustrated in the drawings, like a general LM guide, a structure is provided in which a ball bearing is inserted between the guide rail 110 and the guide block 120 to minimize vibration and friction during the movement.

Meanwhile, the elastic rail 130 is fixed to the cover plate 200. The elastic rail 130 adjoins the guide block 120 and guides the guide block 120 so that the guide block 120 is returned to the central portion of the guide rail 110, as an origin, by an elastic force.

Specifically, the elastic rail 130 is formed in the shape of a plate having elasticity and elongated in parallel with the guide rail 110 in the movement direction of the guide block 120.

In addition, the elastic rail 130 is formed to be inclined toward the central portion in the direction toward the cover plate 200, and a gradient becomes gentle toward the central portion.

That is, the elastic rail 130 is formed to be concave in the direction toward the cover plate 200, and the central portion is gently formed to be almost close to horizontality.

In this case, the central portion of the elastic rail 130 is disposed on the same line as the central portion of the guide rail 110.

The elastic rails 130 are respectively disposed at two opposite sides of the guide rail 110.

In addition, the central portion of the elastic rail 130 is fixed by the fixing block 140 and spaced apart from the cover plate 200 at a predetermined interval, and two opposite ends of the elastic rail 130 are disposed in a free state so as to be deformed to be bent upward and downward.

In this case, the fixing block 140 is formed integrally with the central portion of the elastic rail 130 and formed in a shape protruding from the central portion of the elastic rail 130 in the direction toward the cover plate 200.

In addition, separation prevention portions 131 protrude from two opposite ends of the elastic rail 130.

The separation prevention portions 131 are respectively formed at two opposite ends of the elastic rail 130 and formed to be inclined to have a height that gradually increases in a direction away from a seismic isolation plate.

The separation prevention portion 131 prevents the guide block 120 from being separated from the elastic rail 130.

In addition, the elastic rail 130 is manufactured in a state in which the central portion is divided, and the elastic rail 130 may be joined by welding during an assembly process and used. This is intended to reduce manufacturing costs. In case that a length is long, a processing cost is increased, and in case that the length is cut in half, manufacturing may be performed by various methods, such as casting, thereby reducing manufacturing costs.

### [Third Embodiment]

Because a seismic isolation apparatus according to a third embodiment of the present disclosure is identical to the seismic isolation apparatus according to the second embodiment in terms of the remaining configurations, except for a configuration in which the pendular guide module 100 further includes auxiliary elastic bodies 170, only the auxiliary elastic bodies 170 will be described in detail.

As illustrated in FIG. 8, the auxiliary elastic bodies 170 are provided at two opposite ends of the elastic rail 130 and elastically support the elastic rail 130 in a direction opposite to the cover plate 200.

The auxiliary elastic body 170 is a flat spring having a 'V' shape having a folded center.

The auxiliary elastic bodies 170 are respectively disposed at two opposite ends of the elastic rail 130, one end of the auxiliary elastic body 170 is fixed to the cover plate 200, and the other end of the auxiliary elastic body 170 is disposed to adjoin the elastic rail 130.

The auxiliary elastic bodies 170 serve to reinforce the elastic repulsive force that decreases toward the two opposite ends of the elastic rail 130.

As described above, the auxiliary elastic bodies 170 are provided at the two opposite ends of the elastic rail 130, such that an overall elastic repulsive force of the elastic rail 130 may be improved, thereby enabling a quick return to the origin.

### [Fourth Embodiment]

As illustrated in FIG. 9, because a seismic isolation apparatus according to a fourth embodiment of the present disclosure is identical to the seismic isolation apparatus according to the first embodiment in terms of the remaining configurations, except for the pendular guide module 100, only the pendular guide module 100 will be described in detail.

In the pendular guide module 100 according to the fourth embodiment, the auxiliary elastic bodies 170 are provided instead of the support blocks 150 in the pendular guide module 100 according to the first embodiment.

The auxiliary elastic body 170 is mounted on the cover plate 200 and configured as a flat spring having a dome shape curved in the direction toward the elastic rail 130.

The auxiliary elastic bodies 170 are respectively provided one by one at left and right sides of the elastic rail 130 and support the elastic rail 130 in the direction opposite to the cover plate 200.

### [Fifth Embodiment]

As illustrated in FIG. 10, because a seismic isolation apparatus according to a fifth embodiment of the present disclosure is identical to the seismic isolation apparatus according to the first embodiment in terms of the remaining configurations, except for the pendular guide module 100, only the pendular guide module 100 will be described in detail.

The pendular guide module 100 according to the fifth embodiment includes the guide rail 110, the guide block 120, the elastic rails 130, the fixing blocks 140, and the guide bearings 160.

The guide rail 110 is a component configured to guide the movement of the guide block 120. The guide rail 110 is formed in a straight shape and fixed to the cover plate 200.

The guide block 120 is mounted to slide along the guide rail 110.

Although not illustrated in the drawings, like a general LM guide, a structure is provided in which a ball bearing is inserted between the guide rail 110 and the guide block 120 to minimize vibration and friction during the movement.

Meanwhile, the elastic rail 130 is fixed to the cover plate 200. The elastic rail 130 adjoins the guide block 120 and guides the guide block 120 so that the guide block 120 is returned to the central portion of the guide rail 110, as an origin, by an elastic force.

Specifically, the elastic rail 130 is formed in the shape of a plate having elasticity and elongated in parallel with the guide rail 110 in the movement direction of the guide block 120.

In addition, the two opposite ends of the elastic rail 130 are fixed by the fixing blocks 140 and spaced apart from the cover plate 200 at a predetermined interval, and the central portion of the elastic rail 130 is disposed in a free state so as to be deformed to be bent upward and downward.

In this case, the fixing blocks 140 are formed integrally with the two opposite ends of the elastic rail 130 and each have a shape protruding in the direction toward the cover plate 200.

In addition, the elastic rail 130 is formed to be inclined toward the central portion in the direction toward the cover plate 200, and a gradient becomes gentle toward the central portion.

That is, the elastic rail 130 is formed to be concave in the direction toward the cover plate 200, and the central portion is gently formed to be almost close to horizontality.

In this case, the central portion of the elastic rail 130 is disposed on the same line as the central portion of the guide rail 110, and the elastic rails 130 are respectively disposed at two opposite sides of the guide rail 110.

In addition, the central portions of the elastic rails 130 are divided, and the ends of the central portions are spaced apart from each other at a predetermined interval and formed to be independently deformed to be bent.

In this case, the fixing blocks 140 are formed integrally with the elastic rail 130 and each have a shape protruding in the direction toward the cover plate 200.

In addition, the auxiliary elastic bodies 170 are provided on the central portion of the elastic rail 130.

The auxiliary elastic bodies 170 are provided on the central portion of the elastic rail 130 and elastically support the elastic rail 130 in the direction opposite to the cover plate 200.

The auxiliary elastic body 170 is a flat spring having a 'V' shape having a folded center.

The auxiliary elastic bodies 170 are disposed on the central portion of the elastic rail 130 so as to be symmetric vertically, one end of the auxiliary elastic body 170 is fixed to the cover plate 200, and the other end of the auxiliary elastic body 170 is disposed to adjoin the elastic rail 130.

The auxiliary elastic body 170 serves to reinforce the elastic force of the central portion of the elastic rail 130.

Therefore, the auxiliary elastic bodies 170 are provided at the two opposite ends of the elastic rail 130, such that an overall elastic repulsive force of the elastic rail 130 may be improved, thereby enabling a quick return to the origin.

Because the guide bearing 160 is identical to that in the first embodiment, a detailed description thereof will be omitted.

### [Sixth Embodiment]

As illustrated in FIG. 11, because a seismic isolation apparatus according to a sixth embodiment of the present disclosure is identical to the seismic isolation apparatus according to the first embodiment in terms of the remaining configurations, except for the pendular guide module 100, only the pendular guide module 100 will be described in detail.

The pendular guide module 100 according to the sixth embodiment includes the guide rail 110, the guide block 120, the elastic rails 130, and the guide bearings 160.

The guide rail 110 is a component configured to guide the movement of the guide block 120. The guide rail 110 is formed in a straight shape and fixed to the cover plate 200.

The guide block 120 is mounted to slide along the guide rail 110.

Although not illustrated in the drawings, like a general LM guide, a structure is provided in which a ball bearing is inserted between the guide rail 110 and the guide block 120 to minimize vibration and friction during the movement.

Meanwhile, the elastic rail 130 is fixed to the cover plate 200. The elastic rail 130 adjoins the guide block 120 and guides the guide block 120 so that the guide block 120 is returned to the central portion of the guide rail 110, as an origin, by an elastic force.

Specifically, the elastic rail 130 is formed in the shape of a plate having elasticity and elongated in parallel with the guide rail 110 in the movement direction of the guide block 120.

In addition, the elastic rail 130 is formed to be inclined toward the central portion in the direction toward the cover plate 200, and a gradient becomes gentle toward the central portion.

That is, the elastic rail 130 is formed to be concave in the direction toward the cover plate 200, and the central portion is gently formed to be almost close to horizontality.

In addition, the two opposite ends of the elastic rail 130 are bent in a 'U' shape to have elasticity and fixed to the cover plate 200.

That is, the two opposite ends of the elastic rail 130 are bent in a shape folded at 180 degrees in the direction toward the cover plate 200.

The two opposite ends of the elastic rail 130 provide an elastic force to the elastic rail 130 in the vertical direction.

In addition, the central portion of the elastic rail 130 is disposed in a free state so as to be deformed to be bent upward and downward.

In addition, the auxiliary elastic bodies 170 are provided on the central portion of the elastic rail 130.

The auxiliary elastic bodies 170 are provided on the central portion of the elastic rail 130 and elastically support the elastic rail 130 in the direction opposite to the cover plate 200.

The auxiliary elastic body 170 is a flat spring having a 'V' shape having a folded center.

The auxiliary elastic bodies 170 are disposed on the central portion of the elastic rail 130 so as to be symmetric vertically, one end of the auxiliary elastic body 170 is fixed to the cover plate 200, and the other end of the auxiliary elastic body 170 is disposed to adjoin the elastic rail 130.

As described above, the two opposite ends of the elastic rail 130 are formed to be bent to have elasticity, and the auxiliary elastic bodies 170 are provided on the central portion of the elastic rail 130, such that the elastic forces of the two opposite ends and the central portion are increased, thereby providing an effect of reinforcing the elastic repulsive force and enabling a quicker and more accurate return to the origin.

Because the guide bearing 160 is identical to that in the first embodiment, a detailed description thereof will be omitted.

### [Seventh Embodiment]

As illustrated in FIGS. 12 to 16, constituent elements of a seismic isolation apparatus according to a seventh embodiment of the present disclosure will be described schematically. The seismic isolation apparatus includes pendular guide modules 1000, cover plates 2000, and a center module 3000.

The above-mentioned constituent elements will be specifically described below.

The pendular guide module 1000 is a device for implementing a linear reciprocating motion. Two pendular guide modules 1000 are respectively mounted on upper and lower portions of an elastic body and mounted to be symmetric horizontally. The pendular guide modules 1000 are disposed to intersect each other and serve to reduce vibration while performing reciprocating motions in the horizontal direction.

Specifically, the pendular guide module 1000 includes a guide rail 1100, a guide block 1200, elastic rails 1300, fixing blocks 1400, and guide bearings 1600.

The guide rail 1100 is a component configured to guide a movement of the guide block 1200. The guide rail 1100 is formed in a straight shape and fixed to the cover plate 2000 in a diagonal direction.

The guide block 1200 is mounted to slide along the guide rail 1100.

Although not illustrated in the drawings, like a general LM guide, a structure is provided in which a ball bearing is inserted between the guide rail 1100 and the guide block 1200 to reduce vibration and friction during the movement.

The elastic rail 1300 is fixed to the cover plate 2000. The elastic rail 1300 adjoins the guide block 1200 and serves to guide the guide block 1200 so that the guide block 1200 is returned to a central portion of the guide rail 1100, as an origin, by an elastic force.

Specifically, the elastic rail 1300 is formed in the shape of a plate having elasticity and elongated in parallel with the guide rail 1100 in a movement direction of the guide block 1200.

In addition, the elastic rail 1300 is formed to be horizontal or inclined toward the central portion in the direction toward the cover plate 2000. In case that the elastic rail 1300 is installed to be inclined, a gradient becomes gentle toward the central portion.

That is, the elastic rail 1300 is formed to be concave in the direction toward the cover plate 2000, and the central portion is gently formed to be almost close to horizontality.

In this case, a central portion of the elastic rail 1300 is disposed on the same line as the central portion of the guide rail 1100.

In addition, the elastic rails 1300 are respectively disposed at two opposite sides of the guide rail 1100 and have a rectangular shape in which two opposite ends of the elastic rails 1300 are connected to one another in a 'U' shape.

In addition, the elastic rail 1300 is formed to have a structure in which a rail width decreases toward two opposite ends in order to overcome a problem in which an elastic force increases as the guide block 1200 moves toward the two opposite ends. Therefore, the elastic rail 1300 is designed such that a uniform elastic force is applied to the guide block 1200.

In addition, the elastic rail 1300 is provided with a groove portion 1320 and formed at a center thereof and formed as a circular groove in the direction toward the cover plate 2000, and coupling portions 1360 formed in the shape of a plate at two opposite ends thereof.

The groove portion 1320 is formed to be slightly larger than an outer diameter of the guide bearing 1600, such that the guide bearing 1600 may be easily positioned in the groove portion 1320.

Therefore, the guide bearing 1600 coupled to the guide block 1200 is positioned in the groove portion 1320 when the guide bearing 1600 returns to the center after the guide bearing 1600 moves toward the two opposite ends of the elastic rail 1300.

At least one through-hole 1370 is provided in an upper surface of the coupling portion 1360, and the coupling portion 1360 is coupled to the fixing block 1400 and fixed to the cover plate 2000 through the through-hole 1370.

In addition, an outer peripheral structure of the elastic rail 1300 is formed as a structure longer than a distance (displacement amount) in the movement direction of the guide block 1200 based on a width corresponding to a width of the guide bearing 1600.

In addition, the elastic rail 1300 may further include a pair of groove portions 1340 positioned at two opposite sides of the groove portion 1320 and opened inward.

In addition, the elastic rail 1300 may further include separation prevention portions (not illustrated and not designated) formed at two opposite ends thereof and formed to be inclined to have a height that gradually increases outward from the center so that the guide block 1200 is not separated.

In addition, in case that the elastic rail 1300 has a constant thickness, the elastic rail 1300 may be formed as a structure having a width that decreases toward two opposite ends.

In addition, various types of spring steel may be applied to the elastic rail 1300, and the elastic rail 1300 may be made of various metallic materials, such as SPS1 to SPS9, SK5 and series thereof, and various types of carbon tool steel.

The elastic rail 1300 formed as described above provides an effect of simplifying a component production process, and thus provides an economical effect.

The fixing block 1400 is formed in a hexahedral shape having at least one through-hole and fixed to the cover plate 2000.

In the embodiment of the present disclosure, the fixing block 1400 is formed in a hexahedral shape. However, the present disclosure is not limited thereto.

In addition, the fixing block 1400 may be manufactured integrally with the cover plate 2000.

The through-hole of the fixing block 1400 is coupled to the through-hole 1370 of the elastic rail 1300 by means of a fixing bolt.

In addition, in some instances, the fixing block 1400 may be manufactured to be integrated with the cover plate 2000.

In addition, an inclined fixing surface 141 is formed on a surface of the fixing block 1400 that adjoins the elastic rail 1300, and the inclined fixing surface 141 is inclined in a direction toward the cover plate 2000 and a direction toward the central portion of the elastic rail 1300.

Therefore, the elastic rail 1300 fixed to the fixing block 1400 is inclined in the direction toward the cover plate 2000 and the direction toward the central portion and disposed to be spaced apart from the cover plate 2000 by a height of the fixing block 1400, and as a result, the central portion of the elastic rail 1300 is disposed to be deformed to be bent upward and downward.

In addition, in some instances, a size of the fixing block 1400 may be changed, and a fixing bolt and an attachment block may be added to the fixing block 1400 to prevent the guide block 1200 from being separated from the guide rail 1100.

Meanwhile, as illustrated in FIG. 6, the support block 1500 formed in a hexahedral shape is positioned between the guide rail 1100 and the cover plate 2000 and positioned to be fixed to the cover plate 2000.

In the embodiment of the present disclosure, the support block 1500 is formed in a hexahedral shape. However, the present disclosure is not limited thereto.

In addition, in some instances, the support block 1500 may be manufactured to be integrated with the cover plate 2000.

The inclined support surface 151 may be formed and provided on one surface of the support block 1500, and the support block 1500 may correspond to a height of the elastic rail 1300.

In addition, in some instances, the support block 1500 may have a flat surface without the inclined support surface 151.

Meanwhile, the guide bearing 1600 is formed in the shape of a circular plate having a through-hole provided at a center thereof. The guide bearings 1600 are respectively and rotatably mounted at two opposite sides of the guide block 1200 and rotate while adjoining the elastic rail 1300 when the guide block 1200 moves.

The guide bearing 1600 transmits an elastic force of the elastic rail 1300 to the guide block 1200 to minimize friction with the elastic rail 1300 so that the guide block 1200 operates naturally.

Like the pendular guide modules 1000, two cover plates 2000 are provided, and the cover plates 2000 are disposed to be symmetric horizontally based on the center module 3000 and respectively coupled to the pendular guide modules 1000.

The center module 3000 is a component configured to provide an elastic force in a vertical direction and made of vibration-proof rubber.

In addition, the center module 3000 may be variously configured by using soft plastic, a spring suspension, a disc spring, or the like.

In the seismic isolation apparatus according to the seventh embodiment of the present disclosure configured as described above, the guide block 1200 is supported to be forcibly returned to the central portion of the elastic rail 1300, as an origin, by the elastic repulsive force of the elastic rail 1300.

In addition, because a separate coil spring does not need to be installed, the present disclosure provides an effect of reducing costs, reducing an exterior dimension, and diversifying installation locations.

In addition, the present disclosure provides an effect of quickly and accurately returning the guide block to the central portion, as an origin.

### [Eighth Embodiment]

As illustrated in FIGS. 7 and 8, because a seismic isolation apparatus according to the second embodiment of the present disclosure is identical to the seismic isolation apparatus according to the seventh embodiment in terms of the remaining configurations, except for a configuration in which the pendular guide module 1000 further includes auxiliary elastic bodies 1700, only the auxiliary elastic body 1700 will be described in detail.

The auxiliary elastic body 1700 is formed as a flat spring provided with at least one through-hole. The auxiliary elastic bodies 1700 are provided at two opposite ends of the elastic rail 1300 and elastically support the elastic rail 1300 in the direction opposite to the cover plate 2000.

Specifically, the auxiliary elastic bodies 1700 are respectively disposed at two opposite ends of the elastic rail 1300, one end of the auxiliary elastic body 1700 is fixed to the cover plate 2000, and the other end of the auxiliary elastic body 1700 is disposed to adjoin the elastic rail 1300.

The through-hole of the auxiliary elastic body 1700 is coupled to the through-hole 1370 of the elastic rail 1300 and the through-hole of the fixing block 1400 by means of a fixing bolt.

The auxiliary elastic bodies 1700 serve to reinforce the elastic repulsive force that decreases toward the two opposite ends of the elastic rail 1300.

Specifically, as illustrated in FIG. 8, when the guide block 1200 moves to the two opposite ends of the elastic rail 1300 by vibration, high stress is applied to the elastic rail 1300 by the guide bearing 1600 of the guide block 1200, and high stress is also applied to the fixing bolt configured to fix the elastic rail 1300.

In this case, the auxiliary elastic bodies 1700 positioned at the two opposite ends of the elastic rail 1300 reduce stress applied to the fixing bolt and induce "elastic bending" to softly occur on the elastic rail 1300, such that an overall elastic repulsive force of the elastic rail 1300 may be improved, and a quick return to the origin may be performed, thereby improving the durability and operational efficiency of the elastic rail 1300.

### [Ninth Embodiment]

As illustrated in FIGS. 9 and 10, because a seismic isolation apparatus according to the third embodiment of the present disclosure is identical to the seismic isolation apparatus according to the seventh embodiment in terms of the remaining configurations, except for a configuration in which the elastic rail 1300 of the pendular guide module 1000 further includes an auxiliary rail 1800 and a clamp 1890, only the auxiliary rail 1800 and the clamp 1890 will be described in detail.

The auxiliary rail 1800 is fixed to the elastic rail 1300 by means of at least one clamp 1890 and positioned between the elastic rail 1300 and the cover plate 2000. The auxiliary rail 1800 supports the elastic rail 1300 while being contracted and expanded in accordance with a position of the guide block 1200.

Specifically, the auxiliary rail 1800 is formed in the shape of a plate having elasticity and having a groove portion 1820 provided at a center thereof, and the auxiliary rail 1800 is elongated in parallel with the guide rail 1100 and the elastic rail 1300 in the movement direction of the guide block 1200.

The groove portion 1820 is formed to have a size corresponding to a size of the groove portion 1320 of the elastic rail 1300.

In addition, the auxiliary rail 1800 is formed to be inclined toward the central portion in the direction toward the cover plate 2000, and a gradient becomes gentle toward the central portion.

That is, the auxiliary rail 1800 is formed to be concave in the direction toward the cover plate 2000, and the central portion is gently formed to be almost close to horizontality.

The clamp 1890 is formed in a 'C' shape to couple the elastic rail 1300 and the auxiliary rail 1800 and positioned between the auxiliary rail 1800 and the cover plate 2000.

In the embodiment of the present disclosure, the auxiliary rails 1800 are respectively disposed at two opposite sides of the elastic rails 1300. However, one or more auxiliary rails 1800 may be mounted and used in accordance with a design structure.

In addition, the auxiliary rail 1800 may additionally have a through-hole 1830 provided at a center of the groove portion 1820, and a through-hole 1330 may be additionally formed at a center of the groove portion 1320 of the elastic rail 1300, such that the auxiliary rail 1800 and the elastic rail 1300 may be coupled by means of a fixing bolt.

In this case, because a configuration of the elastic rail 1300 is identical to the configuration of the elastic rail 1300 of the first embodiment of the present disclosure, a detailed description thereof will be omitted.

However, the elastic rail 1300 may be formed as a structure having a rail width that decreases toward the two opposite ends or formed in a shape having a constant rail width.

Therefore, the auxiliary rail 1800 and the elastic rail 1300 may be more strongly coupled.

### [Tenth Embodiment]

As illustrated in FIGS. 11 to 15, because a seismic isolation apparatus according to a tenth embodiment of the present disclosure is identical to the seismic isolation apparatus according to the seventh embodiment in terms of the remaining configurations, except for a configuration in which a shape of the elastic rail 1300 of the pendular guide module 1000 is changed, the elastic rail 1300 further includes an elastic bracket 1900, and the elastic bracket 1900 and the cover plate 2000 are coupled, only the elastic rail 1300, the elastic bracket 1900, and the cover plate 2000 will be described in detail.

The elastic rail 1300 is fixed to the cover plate 2000. The elastic rail 1300 adjoins the guide block 1200 and serves to guide the guide block 1200 so that the guide block 1200 is returned to a central portion of the guide rail 1100, as an origin, by an elastic force.

Specifically, the elastic rail 1300 is formed in the shape of a plate having elasticity and elongated in parallel with the guide rail 1100 in a movement direction of the guide block 1200.

In addition, the elastic rail 1300 is formed to be inclined toward the central portion in the direction toward the cover plate 2000, and a gradient becomes gentle toward the central portion.

In addition, the elastic rail 1300 may be formed horizontally.

That is, the elastic rail 1300 is formed to be concave in the direction toward the cover plate 2000, and the central portion is gently formed to be almost close to horizontality.

In this case, a central portion of the elastic rail 1300 is disposed on the same line as the central portion of the guide rail 1100.

In addition, the central portion of the elastic rail 1300 is formed to have a large thickness, and a thickness of each of the two opposite ends of the elastic rail 1300 is smaller than the thickness of the central portion.

In addition, the elastic rails 1300 are respectively disposed at two opposite sides of the guide rail 1100 and have a rectangular shape in which two opposite ends of the elastic rails 1300 are connected to one another in a 'U' shape.

In addition, the elastic rail 1300 is formed to have a structure in which a rail width decreases toward two opposite ends in order to overcome a problem in which an elastic force increases as the guide block 1200 moves toward the two opposite ends. Therefore, the elastic rail 1300 is designed such that a uniform elastic force is applied to the guide block 1200.

In addition, the elastic rail 1300 is provided with the groove portion 1320 and formed at the center thereof and formed as a circular groove in the direction toward the cover plate 2000, the coupling portions 1360 formed in the shape of a plate positioned at two opposite ends thereof, and second coupling portions 1380 having a rectangular parallelepiped shape and positioned on surfaces of the coupling portions 1360 in the direction toward the cover plate 2000.

The groove portion 1320 is formed to be slightly larger than an outer diameter of the guide bearing 1600, such that the guide bearing 1600 may be easily positioned in the groove portion 1320.

Therefore, the guide bearing 1600 coupled to the guide block 1200 is positioned in the groove portion 1320 when the guide bearing 1600 returns to the center after the guide bearing 1600 moves toward the two opposite ends of the elastic rail 1300.

At least one through-hole 1370 is provided in a lateral surface of the second coupling portion 1380, and the second coupling portion 1380 is coupled to the elastic bracket 1900 and fixed to the cover plate 2000 by means of the through-hole 1370.

In addition, the elastic rail 1300 may further include the pair of groove portions 1340 positioned at two opposite sides of the groove portion 1320 and opened inward.

In addition, various types of spring steel may be applied to the elastic rail 1300.

In addition, the elastic rail 1300 is manufactured by casting (particularly, wax casting).

This configuration solves a disadvantage in that in case that a model is cut from a carbon steel plate having a predetermined standard by using a laser or a water jet, a loss of an iron plate raw material is increased due to an area of a hollow portion at a center of the elastic rail 1300, which increases manufacturing costs, a disadvantage in that the elastic rail 1300 undergoes difficulties in design due to a complicated shape such that a width of the elastic rail 1300 increases or decreases in accordance with positions in order to provide various elastic repulsive forces in accordance with an operating position of the guide block 1200, and a disadvantage in that a more space than necessary is occupied due to a maximum width of the elastic rail 1300 for cutting the iron plate.

When the elastic rail 1300 is produced by casting (particularly, wax casting), the above-mentioned problems are solved, such that only a minimum amount of raw materials may be used by a casting mold, the elastic rail 1300 may be manufactured to have a constant width, an elastic repulsive force design for respective positions may be comparatively easily performed by adjusting a thickness of the elastic rail 1300, and various effects may be provided in other production quality management in accordance with a mold production method.

Therefore, the elastic rail 1300 formed as described above provides an effect of simplifying a component production process, and thus provides an economical effect.

The elastic bracket 1900 is formed in the shape of a plate having an 'L' shape and an elastic repulsive force, at least one elastic rail coupling hole 1920 is provided in one surface of the elastic bracket 1900, and at least one cover plate coupling hole 1940 is provided in the other surface of the elastic bracket 1900.

The elastic rail coupling hole 1920 is coupled to the through-hole 1370 of the elastic rail 1300 by means of a fixing bolt.

The cover plate coupling hole 1940 is coupled to the cover plate 2000 by means of a fixing bolt.

Because the elastic bracket 1900 formed as described above has the elastic repulsive force, the guide block 1200 positioned on the upper portion of the elastic rail 1300 may be designed to have a uniform elastic force regardless of a position at which the guide block 1200 is positioned.

In addition, various materials, such as metal, plastic, and rubber, may be applied as a material of the elastic bracket 1900. However, particularly, it is effective to use a high-carbon iron plate by performing heat treatment after laser cutting or water jet model cutting.

Like the pendular guide modules 1000, two cover plates 2000 are provided, and the cover plates 2000 are disposed to be symmetric horizontally based on the center module 3000 and respectively coupled to the pendular guide modules 1000.

As illustrated in FIGS. 14 and 15, the cover plate 2000 is provided with a plurality of through-holes 2020 so that the elastic brackets 1900 are fitted into the plurality of through-holes 2020 and coupled to a plurality of fixing bolts.

In addition, the plurality of through-holes 2020 may be formed to have sizes corresponding to those of the elastic brackets 1900 so that the elastic brackets 1900 may be fitted into the plurality of through-holes 2020 and coupled to the plurality of fixing bolts.

In the fourth embodiment of the present disclosure formed as described above, after the plurality of elastic brackets 1900 are fitted into the through-holes 2020 of the cover plates 2000, the elastic brackets 1900 and the cover plates 2000 are coupled by means of the plurality of fixing bolts, and the elastic brackets 1900 and the elastic rails 1300 are coupled by means of the plurality of fixing bolts, such that the cover plates 2000, the elastic brackets 1900, and the pendular guide modules 1000 may be assembled.

Therefore, as illustrated in FIG. 13, in the tenth embodiment of the present disclosure, with the elastic bracket 1900 having the 'L' shape and the elastic repulsive force, the elastic rail 1300 has a uniform elastic force regardless of a position at which the guide block 1200 positioned on the upper portion of the elastic rail 1300 is positioned.

### [Eleventh Embodiment]

As illustrated in FIGS. 16 and 17, because a seismic isolation apparatus according to an eleventh embodiment of the present disclosure is identical to the seismic isolation apparatus according to the seventh embodiment in terms of the remaining configurations, except for the guide block 1200 of the pendular guide module 1000, a description thereof will be omitted, and only the guide block 1200 will be described in detail.

The guide block 1200 is mounted to slide along the guide rail 1100.

Although not illustrated in the drawings, like a general LM guide, a structure is provided in which a ball bearing is inserted between the guide rail 1100 and the guide block 1200 to reduce vibration and friction during the movement.

In addition, a block frame 1250 having a '⊏' shape is additionally provided at an outer side opposite to a side of the guide block 1200 to which the guide rail 1100 is coupled, such that the guide block 1200 is coupled and formed.

As illustrated in FIGS. 16 to 17, the guide block 1200 and the block frame 1250 are coupled by means of a plurality of bolts.

A pair of guide bearing coupling portions 1260 are respectively provided at two opposite ends of the block frame 1250.

A through-hole may be provided at a center of the guide bearing coupling portion 1260, such that the guide bearing coupling portion 1260 may be coupled to the guide bearing 1600 by means of a bolt.

The bolt for coupling may be formed as a shoulder bolt. However, the present disclosure is not limited thereto.

The guide bearing 1600 is positioned between the pair of guide bearing coupling portions 1260.

In the case of the guide block 1200 of the eleventh embodiment of the present disclosure formed as described above, the block frame 1250 may be simply manufactured and additionally assembled to the general guide block 1200, such that the guide block 1200 having a pendulum structure may be formed.

### [Twelfth Embodiment]

As illustrated in FIG. 19, because a seismic isolation apparatus according to a twelfth embodiment of the present disclosure is identical to the seismic isolation apparatus according to the seventh embodiment in terms of the remaining configurations, except for a configuration in which the pendular guide module 1000 further includes the elastic bracket 1900 having the '⊏' shape, only the elastic bracket 1900 will be described in detail.

The elastic bracket 1900 is positioned between the elastic rail 1300 and the cover plate 2000 and serves to support the elastic rail 1300 when the guide block 1200 moves toward the two opposite ends of the elastic rail 1300.

The elastic bracket 1900 is formed in the shape of a plate having a '⊏' shape and an elastic repulsive force, at least one elastic rail coupling hole 1920 is provided in one of the two opposite surfaces of the elastic bracket 1900, which are connected by bending or machining the central portion, and at least one cover plate coupling hole 1940 is provided in the other surface of the elastic bracket 1900.

The elastic rail coupling hole 1920 is coupled to the through-hole 1370 of the elastic rail 1300 by means of a fixing bolt.

The cover plate coupling hole 1940 is coupled to the cover plate 2000 by means of a fixing bolt.

Because the elastic bracket 1900 formed as described above has the elastic repulsive force, the guide block 1200 positioned on the upper portion of the elastic rail 1300 may be designed to have a uniform elastic force regardless of a position at which the guide block 1200 is positioned.

In addition, various materials, such as metal, plastic, and rubber, may be applied as a material of the elastic bracket 1900. However, particularly, it is effective to use a high-carbon iron plate by performing heat treatment after laser cutting or water jet model cutting.

In the twelfth embodiment of the present disclosure formed as described above, the plurality of elastic brackets 1900 are positioned between the cover plates 2000 and the elastic rails 1300, and the cover plates 2000 and the elastic rails 1300 are coupled by means of the plurality of fixing bolts, such that the cover plates 2000, the elastic brackets 1900, and the pendular guide modules 1000 may be assembled. Therefore, it is possible to support the elastic rail 1300 when the guide block 1200 moves toward the two opposite ends of the elastic rail 1300.

### [Thirteenth Embodiment]

As illustrated in FIGS. 19 to 21, because a seismic isolation apparatus according to a thirteenth embodiment of the present disclosure is identical to the seismic isolation apparatus according to the seventh embodiment in terms of the remaining configurations, except for a configuration in which a shape of the elastic rail 1300 of the pendular guide module 1000 is changed, only the elastic rail 1300 will be described in detail.

The elastic rail 1300 is fixed to the cover plate 2000. The elastic rail 1300 adjoins the guide block 1200 and serves to guide the guide block 1200 so that the guide block 1200 is returned to a central portion of the guide rail 1100, as an origin, by an elastic force.

Specifically, the elastic rail 1300 is formed in the shape of a plate having elasticity and elongated in parallel with the guide rail 1100 in a movement direction of the guide block 1200.

In addition, the elastic rail 1300 is formed to be inclined toward the central portion in the direction toward the cover plate 2000, and a gradient becomes gentle toward the central portion.

In addition, the elastic rail 1300 may be formed horizontally.

That is, the elastic rail 1300 is formed to be concave in the direction toward the cover plate 2000, and the central portion is gently formed to be almost close to horizontality.

In this case, a central portion of the elastic rail 1300 is disposed on the same line as the central portion of the guide rail 1100.

In addition, the elastic rails 1300 are respectively disposed at two opposite sides of the guide rail 1100 and have a rectangular shape in which two opposite ends of the elastic rails 1300 are connected to one another in a 'U' shape.

In addition, the elastic rail 1300 is formed to have a structure in which a rail width decreases toward two opposite ends in order to overcome a problem in which an elastic force increases as the guide block 1200 moves toward the two opposite ends. Therefore, the elastic rail 1300 is designed such that a uniform elastic force is applied to the guide block 1200.

However, in some instances, the elastic rail 1300 may be formed as a structure having a rail width that decreases toward the two opposite ends or formed in a shape having a constant rail width.

In addition, the elastic rail 1300 is provided with the groove portion 1320 and formed at a center thereof and formed as a circular groove in the direction toward the cover plate 2000, and the coupling portions 1360 formed in the shape of a plate having a '⊏' shape and formed at two opposite ends thereof.

The groove portion 1320 is formed to be slightly larger than an outer diameter of the guide bearing 1600, such that the guide bearing 1600 may be easily positioned in the groove portion 1320.

Therefore, the guide bearing 1600 coupled to the guide block 1200 is positioned in the groove portion 1320 when the guide bearing 1600 returns to the center after the guide bearing 1600 moves toward the two opposite ends of the elastic rail 1300.

The coupling portion 1360 is connected to the elastic rail 1300 and has at least one through-hole 1370 provided in a portion protruding in the direction toward the cover plate 2000.

The through-hole 1370 is fixed to the fixing block 1400 or the cover plate 2000 by being coupled by the fixing bolt.

In addition, the through-hole 1370 may be fixed and coupled to the auxiliary elastic body 1700 by being coupled by the fixing bolt.

In addition, an outer peripheral structure of the elastic rail 1300 is formed as a structure longer than a distance (displacement amount) in the movement direction of the guide block 1200 based on a width corresponding to a width of the guide bearing 1600.

In addition, the elastic rail 1300 may further include the pair of groove portions 1340 positioned at two opposite sides of the groove portion 1320 and opened inward.

In addition, the elastic rail 1300 may further include separation prevention portions (not illustrated and not designated) formed at two opposite ends thereof and formed to be inclined to have a height that gradually increases outward from the center so that the guide block 1200 is not separated.

In addition, in case that the elastic rail 1300 has a constant thickness, the elastic rail 1300 may be formed as a structure having a width that decreases toward two opposite ends.

In addition, various types of spring steel may be applied to the elastic rail 1300, and the elastic rail 1300 may be made of various metallic materials, such as SPS1 to SPS9, SK5 and series thereof, and various types of carbon tool steel.

In the thirteenth embodiment of the present disclosure formed as described above, the coupling portion 1360 having the '⊏' shape may support the elastic rail 1300 when the guide block 1200 moves toward the two opposite ends of the elastic rail 1300. In addition, therefore, an excellent effect is provided in terms of cost reduction.

The elastic rail 1300 of the seismic isolation apparatus of the seventh to thirteenth embodiments of the present disclosure described above is formed as a structure having a rail width that decreases toward two opposite ends in order to overcome a problem in which an elastic force increases as the guide block 1200 moves toward two opposite ends. However, in some instances, the elastic rail 1300 may be formed to have various structures including a shape having a constant rail width.

Therefore, the seismic isolation apparatus of the seventh to thirteenth embodiments of the present disclosure provides an effect of improving the seismic isolation effect and enhancing the durability.

While the configuration and operation of the seismic isolation apparatus according to the present disclosure have been described above with reference to the detailed description and the drawings, the above-mentioned descriptions are merely illustrative of the embodiments, and various changes and modifications may be made without departing from the technical spirit of the present disclosure.

## Claims

1. A seismic isolation apparatus comprising:
a pendular guide module (100); and
a cover plate (200) mounted on the pendular guide module (100),
wherein the pendular guide module (100) comprises:
a guide rail (110) coupled to the cover plate (200);
a guide block (120) configured to move along the guide rail (110);
an elastic rail (130) fixed to the cover plate (200) and configured to adjoin and guide the guide block (120) so that the guide block (120) is returned to a central portion of the guide rail (110), as an origin, by an elastic force; and
a guide bearing (160) rotatably mounted on the guide block (120) and configured to rotate while adjoining the elastic rail (130) and moving,
wherein the elastic rail (130) is disposed in parallel with the guide rail (110), formed in the shape of a plate having elasticity, and formed to be inclined toward a central portion in a direction toward the cover plate (200),
wherein two opposite ends of the elastic rail (130) are fixed by a fixing block (140) and spaced apart from the cover plate (200) at a predetermined interval, and
wherein the central portion of the elastic rail (130) is disposed in a free state so as to be deformed to be bent upward and downward.

2. The seismic isolation apparatus of claim 1, further comprising:
a support block (150) fixed to the cover plate (200) and configured to adjoin the elastic rail (130) when the central portion of the elastic rail (130) is deformed to be bent,
wherein the support block (150) has an inclined support surface (151) inclined so as to become gradually distant from the elastic rail (130) from a central portion toward two opposite ends.

3. The seismic isolation apparatus of claim 1, wherein the central portion of the elastic rail (130) is fixed by the fixing block (140) and spaced apart from the cover plate (200) at a predetermined interval, and
wherein the two opposite ends of the elastic rail (130) are disposed to be deformed to be bent upward and downward.

4. The seismic isolation apparatus of claim 3, wherein separation prevention portions (131) protrude from the two opposite ends of the elastic rail (130).

5. The seismic isolation apparatus of claim 1, wherein the two opposite ends of the elastic rail (130) are bent in a 'U' shape so as to have elasticity and fixed to the cover plate (200), and
wherein the central portion of the elastic rail (130) is disposed to be deformed to be bent upward and downward.

6. The seismic isolation apparatus of any one of claims 1, 3, and 5, further comprising:
an auxiliary elastic body (170) configured to elastically support the elastic rail (130) in a direction opposite to the cover plate (200).

7. The seismic isolation apparatus of any one of claims 1, 3, and 5, wherein the central portion of the elastic rail (130) is divided, such that the divided central portions are respectively and independently disposed to be deformed to be bent.

8. The seismic isolation apparatus of any one of claims 1 to 5, further comprising:
a center module (300) having an elastic force in a vertical direction,
wherein the pendular guide module (100) is provided as two pendular guide modules (100) operatively mounted on upper and lower portions of the center module (300) in directions intersecting each other.

9. A seismic isolation apparatus comprising:
a pendular guide module (1000); and
a cover plate (2000) mounted on the pendular guide module (1000),
wherein the pendular guide module (1000) comprises:
a guide rail (1100) coupled to the cover plate (2000);
a guide block (1200) configured to move along the guide rail (1100);
an elastic rail (1300) fixed to the cover plate (2000) and configured to adjoin and guide the guide block (1200) so that the guide block (1200) is returned to a central portion of the guide rail (1100), as an origin, by an elastic force; and
a guide bearing (1600) rotatably mounted on the guide block (1200) and configured to rotate while adjoining the elastic rail (1300) and moving.

10. The seismic isolation apparatus of claim 9, wherein the elastic rail (1300) is disposed in parallel with the guide rail (1100), formed in the shape of a plate having elasticity, and formed to be horizontal or inclined toward a central portion in a direction toward the cover plate (2000).

11. The seismic isolation apparatus of claim 10, wherein two opposite ends of the elastic rail (1300) are fixed by fixing blocks (1400) and spaced apart from the cover plate (2000) at a predetermined interval, and
wherein the central portion of the elastic rail (1300) is disposed in a free state so as to be deformed to be bent upward and downward.

12. The seismic isolation apparatus of claim 9, further comprising:
a support block (1500) fixed to the cover plate (2000).

13. The seismic isolation apparatus of claim 10, wherein the elastic rails (1300) are respectively disposed at two opposite sides of the guide rail (1100) and formed in a rectangular shape in which two opposite ends thereof are connected to one another in a 'U' shape,
wherein the central portion of the elastic rail (1300) is fixed by a fixing block (1400) and spaced apart from the cover plate (2000) at a predetermined interval, and
wherein the two opposite ends of the central portion are disposed to be deformed to be bent upward and downward.

14. The seismic isolation apparatus of claim 13, wherein the elastic rail (1300) comprises:
a groove portion (1320) formed at a center of the elastic rail (1300) and formed as a semicircle groove in a direction toward the cover plate (2000); and
coupling portions (1360) provided at the two opposite ends of the elastic rail (1300) and having at least one through-hole (1370).

15. The seismic isolation apparatus of claim 10, wherein the elastic rail (1300) is formed as a structure having a rail width that decreases toward two opposite ends, and
wherein the central portion of the elastic rail (1300) is disposed to be deformed to be bent upward and downward.

16. The seismic isolation apparatus of any one of claims 11, 13, and 15, further comprising:
an auxiliary elastic body (1700) configured to elastically support the elastic rail (1300) in a direction opposite to the cover plate (2000).

17. The seismic isolation apparatus of claim 10, wherein the elastic rail (1300) further comprises an auxiliary rail (1800) fixed to the elastic rail (1300) by means of at least one clamp (1890) having a 'C' shape, the auxiliary rail (1800) being positioned between the elastic rail (1300) and the cover plate (2000).

18. The seismic isolation apparatus of claim 17, wherein the auxiliary rail (1800) is formed in the shape of a plate having elasticity and provided with a groove portion (1820) provided at a center of the auxiliary rail (1800) and formed as a semicircle groove in the direction toward the cover plate (2000), and
wherein the auxiliary rail (1800) is elongated in parallel with the guide rail (1100) and the elastic rail (1300) in a movement direction of the guide block (1200).

19. The seismic isolation apparatus of any one of claims 9 to 15, further comprising:
a center module (3000) having an elastic force in a vertical direction,
wherein the pendular guide module (1000) is provided as two pendular guide modules (100) operatively mounted on upper and lower portions of the center module (3000) in directions intersecting each other.
